# EUROPEAN PATENT APPLICATION

(11) **EP 2 708 663 A1**
(43) Date of publication of application: **19.03.2014**
(21) Application number: 12786702.6
(22) Date of filing: 27.04.2012
(51) Int. Cl.: E02F 9/26, E02F 9/24, H04N 7/18

(54) **DEVICE FOR DISPLAYING REARWARD FIELD OF VIEW OF HYDRAULIC SHOVEL**

(30) Priority: 13.05.2011 JP 2011108425
(71) Applicant: Hitachi Construction Machinery Co., Ltd., Bunkyo-ku Tokyo 112-8563 (JP)
(72) Inventor: NAKAMURA Keiichiro, Tsuchiura-shi Ibaraki 300-0013 (JP); WATANABE Yutaka, Tsuchiura-shi Ibaraki 300-0013 (JP); SHIBAMORI Kazuhiro, Tsuchiura-shi Ibaraki 300-0013 (JP); TSUKADA Hidenobu, Tsuchiura-shi Ibaraki 300-0013 (JP); ODAGIRI Kinya, Tsuchiura-shi Ibaraki 300-0013 (JP)
(74) Representative: MERH-IP Matias Erny Reichl Hoffmann
(86) International application number: PCT/JP2012/061429
(87) International publication number: WO 2012/157438

(57) **Abstract**

The present invention obtains a device for displaying the rearward field of view of a hydraulic shovel, the device enabling safe and efficient work by a front working machine. A device for displaying the rearward field of view of a hydraulic shovel is provided with a lower traveling structure, an upper revolving structure provided on the lower traveling structure so as to be rotatable, a front working machine provided in the front part of the upper revolving structure, a camera provided in the rear part of the upper revolving structure in order to obtain the rearward field of view of the revolving structure, and a monitor (21) for displaying an image acquired by the camera. The device is configured to previously store the maximum working radius of the front working machine, display the image acquired by the camera on the monitor, and display a distance display line (50) indicating the maximum working radius of the front working machine, a distance display line (51) indicating an actual working radius while at work, and the like while superposing the distance display lines and the like on the image acquired by the camera.

## Description

### Background of the Invention

### Technical Field

The present invention relates to a device for displaying the rearward field of view of a hydraulic shovel that an image of the rearward field of view obtained from a rearward monitoring camera is displayed on a monitor installed within a driving cab.

### Background Art

The hydraulic shovel is configured by the one that an upper revolving structure is installed on a lower traveling structure having a crawler type traveling means via a revolving device, and the driving cab and a front working machine as a working means are mounted on the upper revolving structure. These driving cab and front working machine are arranged on a front part of the upper revolving structure. In addition, a building configuring a machine room is disposed on the rear side of the driving cab on the upper revolving structure and a counter weight is arranged at the rearmost position.

The hydraulic shovel is used mainly for performing work such as sediment excavation. A driver's seat on which an operator sits is installed within the driving cab, and an operation lever, an operation pedal and so forth are disposed on left and right both side parts and a front part of this driver's seat as operation means. Therefore, the operator is allowed to operate each of the respective operation means sitting on the driver's seat, and although the operator can confirm the situations of forward and side areas of the driver's seat with his naked eyes while he is operating it, rearward and diagonally rearward view fields cannot be obtained in a forward facing posture.

From the viewpoint of safety and the like of the work, it is extremely important to obtain the rearward view field, and, in particular, in a case where a worker enters and works in a working site that the hydraulic shovel is in operation, in a case where objects such as buildings and so forth are present around it, and in other cases, it becomes extremely important to confirm safety in a rearward area.

In order to make it possible to confirm safety in the rearward area even in a state that the operator faces forward in the driving cab, the rearward view field can be obtained by installing a monitoring camera on a rear part of the upper revolving structure and displaying an image from this camera on a monitor installed in the driving cab. As the one which is configured that the rearward monitoring camera is provided on the hydraulic shovel as described above, there is the one, for example, described in Japanese Patent No. 4196826 (Patent Literature 1) or the like.

In the one described in this Patent Document 1, a graduation which is formed rearward from the position of the rearmost part of the upper revolving structure as the origin is displayed as a distance display line by superposing on an image acquired by the aforementioned camera.

### Citation List

### Patent Literature

Patent Literature 1: Japanese Patent No. 4196826

### Summary of the Invention

### Technical Problem

In the one in the above-mentioned Patent Literature 1, since it is made such that the monitoring camera is installed on the rear part of the upper revolving structure so as to display the image from this camera on a monitor installed in the driving cab and to perform display of a distance from the rearmost part of the upper revolving structure also by the aforementioned monitor, the rearward field of view can be obtained and a distance of an architectural structure or a worker present behind it from the rearmost part of the upper revolving structure can be grasped. Therefore, safety confirmation of a diagonally rearward area can be made when the hydraulic shovel is to be moved backward and when it is to be revolved.

However, since the one in this Patent Literature 1 only describes that the distance with the architectural structure or the worker present behind the upper revolving structure of the hydraulic shovel is grasped, nothing is considered as to interference of a front working machine attached to the front part of the upper revolving structure with the architectural structure and the worker present behind the upper revolving structure of the hydraulic shovel when the upper revolving structure is revolved and it was difficult to confirm presence/absence of an object and a person within a working radius of the hydraulic shovel, room for improvement was left in a point that a revolving operation is safely performed to efficiently perform the work by the front working machine.

An object of the present invention is to obtain a device for displaying the rearward field of view of a hydraulic shovel capable of performing safely and efficiently the work by the front working machine.

### Solution to Problem

In order to attain the above-mentioned object, the present invention is characterized in that in a device for displaying the rearward field of view of a hydraulic shovel comprising a lower traveling structure; an upper revolving structure provided on this lower traveling structure to be revolvable, a front working machine provided on a front part of this upper revolving structure, a camera provided on a rear part of the aforementioned upper revolving structure in order to obtain the rearward field of view of this revolving structure and a monitor for displaying an image acquired by this camera, it is configured such that a maximum working radius of the aforementioned front working machine is stored in advance, and on the aforementioned monitor, the image acquired by the aforementioned camera is displayed, and a distance display line indicating the maximum working radius by the aforementioned front working machine is displayed by superposing on the image acquired by the aforementioned camera.

Further, in this device for displaying the rearward field of view of the hydraulic shovel, it is more preferable to configure such that the aforementioned front working machine is provided with a boom attached to a front part of the aforementioned upper revolving structure so as to freely face downward and upward, an arm one end of which is attached to a leading end side of this boom to be rotatable and to the other end of which a working tool is attached, a boom angle sensor for detecting an angle of the boom, and an arm angle sensor for detecting an angle of the aforementioned arm, a work-in-progress working radius of the aforementioned front working machine is arithmetically operated from the angles of the boom and the arm detected by the aforementioned boom angle sensor and the aforementioned arm angle sensor, and on the aforementioned monitor, a distance display line indicating the aforementioned maximum working radius and a distance display line indicating the aforementioned arithmetically operated working radius are displayed by superposing on the image acquired by the aforementioned camera.

Another characteristic of the present invention lies in that in a device for displaying the rearward field of view of a hydraulic shovel comprising a lower traveling structure; an upper revolving structure provided on this lower traveling structure to be revolvable, a front working machine provided on a front part of this upper revolving structure, a camera provided on a rear part of the aforementioned upper revolving structure in order to obtain the rearward field of view of this revolving structure and a monitor for displaying an image acquired by this camera, the aforementioned front working machine having a boom attached to a front part of the aforementioned upper revolving structure so as to freely face downward and upward and an arm one end of which is attached to a leading end side of this boom to be rotatable and to the other end of which a working tool is attached, it is configured such that a boom angle sensor for detecting an angle of the aforementioned boom and an arm angle sensor for detecting an angle of the aforementioned arm are provided, a work-in-progress working radius of the aforementioned front working machine is arithmetically operated from the angles of the boom and the arm detected by the aforementioned boom angle sensor and the aforementioned arm angle sensor, and on the aforementioned monitor, an image acquired by the aforementioned camera is displayed, and a distance display line indicating the aforementioned arithmetically operated working radius is displayed by superposing on the image acquired by the aforementioned camera.

In the device for displaying the rearward field of view of the hydraulic shovel described in any of the above, it is more preferable to configure such that a minimum revolving radius of the upper revolving structure including the aforementioned front working machine is stored in advance, and on the aforementioned monitor, a distance display line indicating the aforementioned minimum revolving radius is displayed by superposing on the image acquired by the aforementioned camera.

Further, decision as to contact with an architectural structure or the like which is present above is facilitated by configuring such that a work-in-progress working height of the aforementioned front working machine is arithmetically operated from the angles of the boom and the arm detected by the aforementioned boom angle sensor and the aforementioned arm angle sensor, and on the aforementioned monitor, the aforementioned arithmetically operated working height is numerically displayed on the image acquired by the aforementioned camera. In addition, it is more preferable to configure such that a work-in-progress working radius of the aforementioned front working machine is arithmetically operated from the angles of the boom and the arm detected by the aforementioned boom angle sensor and the aforementioned arm angle sensor, and on the aforementioned monitor, also the aforementioned arithmetically operated working radius is numerically displayed on the image acquired by the aforementioned camera.

### Advantageous Effects of the Invention

According to the present invention, since it is configured such that on the monitor, the image acquired by the camera is displayed, and the distance display line indicating the maximum working radius by the front working machine which is stored or the distance display line indicating the work-in-progress working radius of the front working machine which has been obtained by arithmetic operation is also displayed by superposing on the image acquired by the aforementioned camera, there can be obtained the device for displaying the rearward field of view of the hydraulic shovel capable of safely and efficiently performing the work by the front working machine.

### Brief Description of the Drawings

[Figure 1]

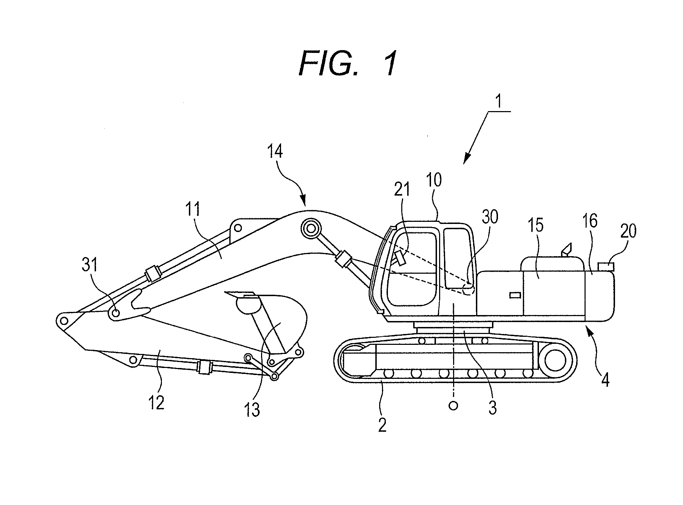

   Figure 1 is a general configuration diagram of a hydraulic shovel provided with a device for displaying the rearward field of view of an example 1 of the present invention.
[Figure 2]

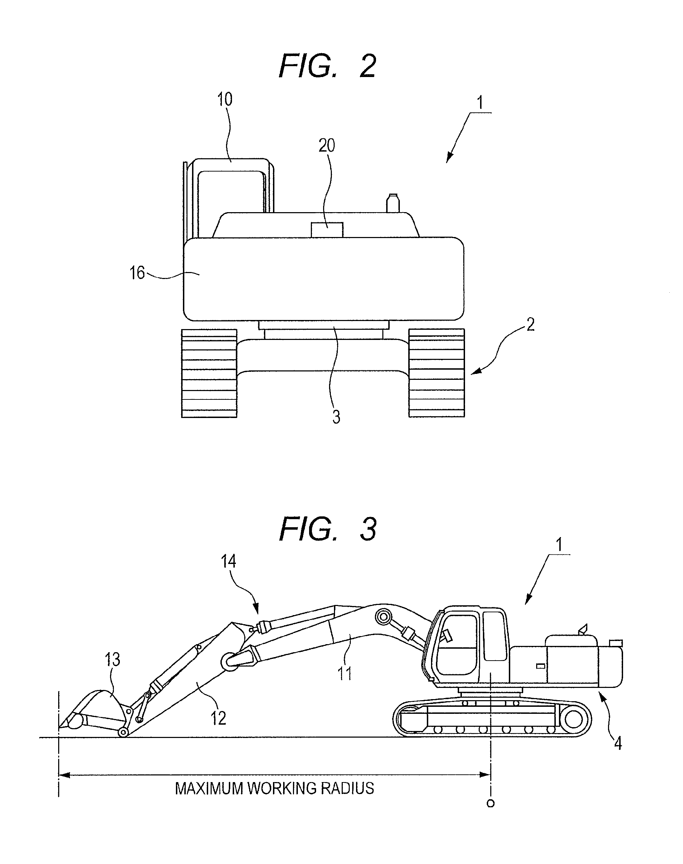

   Figure 2 is a diagram of the hydraulic shovel shown in Figure 1 when viewed from behind.
[Figure 3]
   Figure 3 is a diagram explaining a maximum working radius of the hydraulic shovel.
[Figure 4]

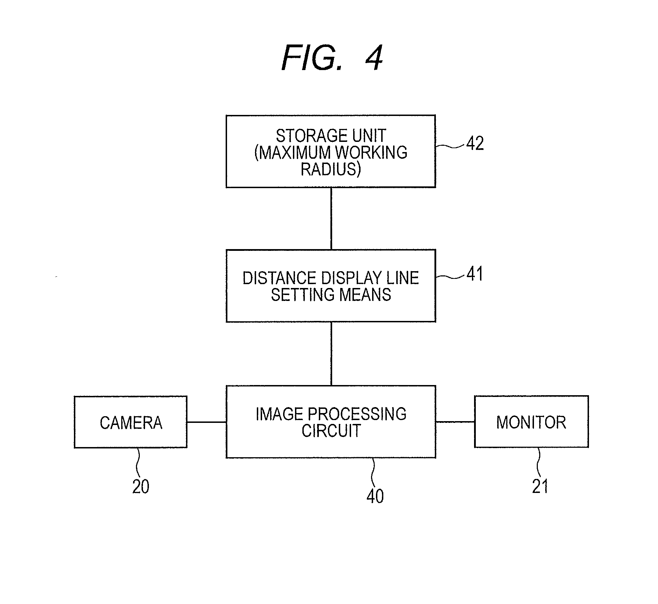

   Figure 4 is a diagram showing a circuit configuration of the device for displaying the rearward field of view in the example 1 of the present invention.
[Figure 5]

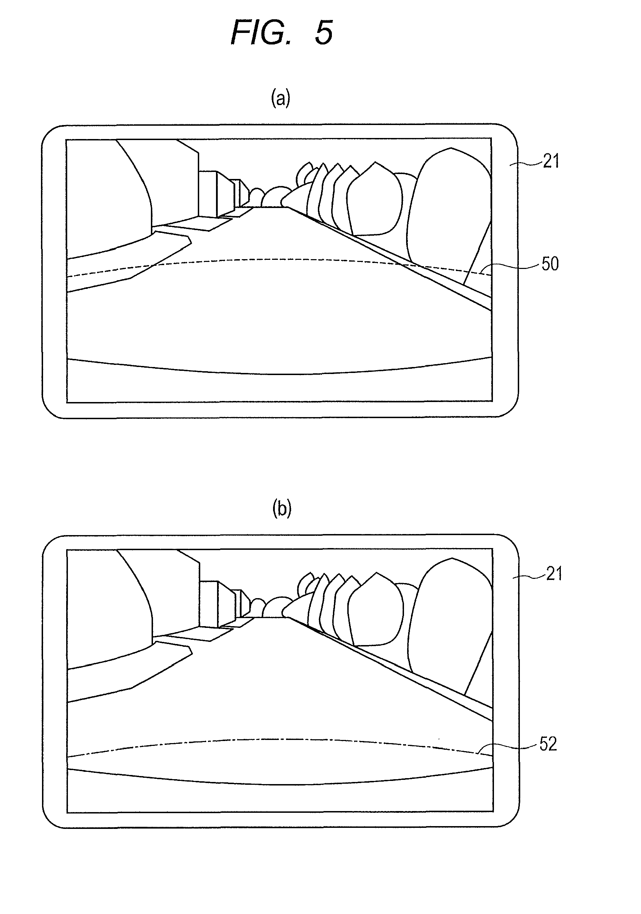

   Figure 5 is illustrations showing display examples of a monitor screen of the device for displaying the rearward field of view in the example 1 of the present invention, in which (a) shows an example that a distance display line of the maximum working radius is displayed, and (b) is a diagram showing an example that a distance display line of a minimum revolving radius is displayed.
[Figure 6]

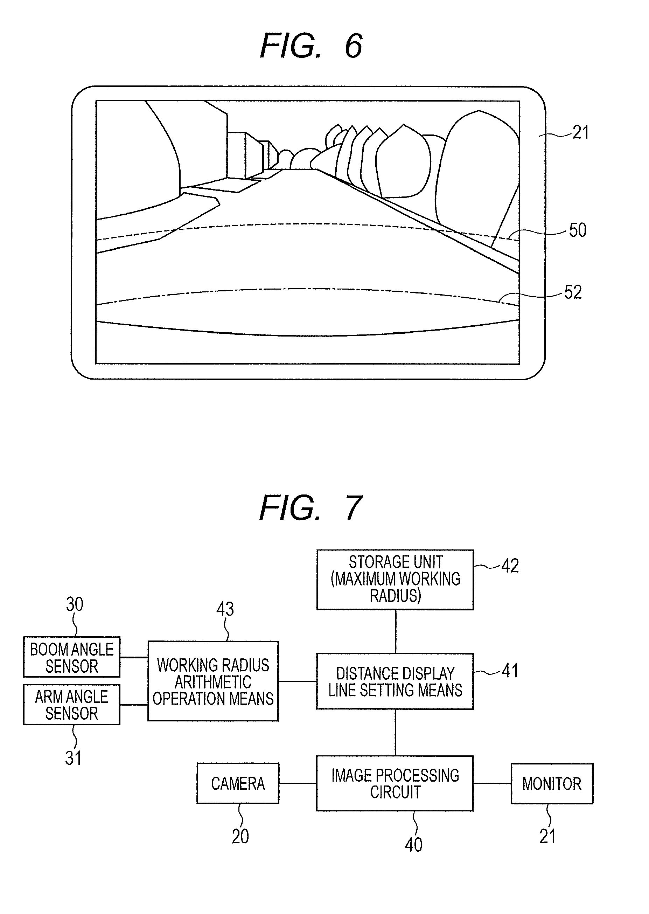

   Figure 6 is an illustration showing a display example of the monitor screen of the device for displaying the rearward field of view in the example 1 of the present invention, the diagram showing an example that both of the distance display line of the maximum working radius and the distance display line of the minimum revolving radius are displayed.
[Figure 7]
   Figure 7 is a diagram showing another example of the circuit configuration of the device for displaying the rearward field of view in the example 1 of the present invention.
[Figure 8]

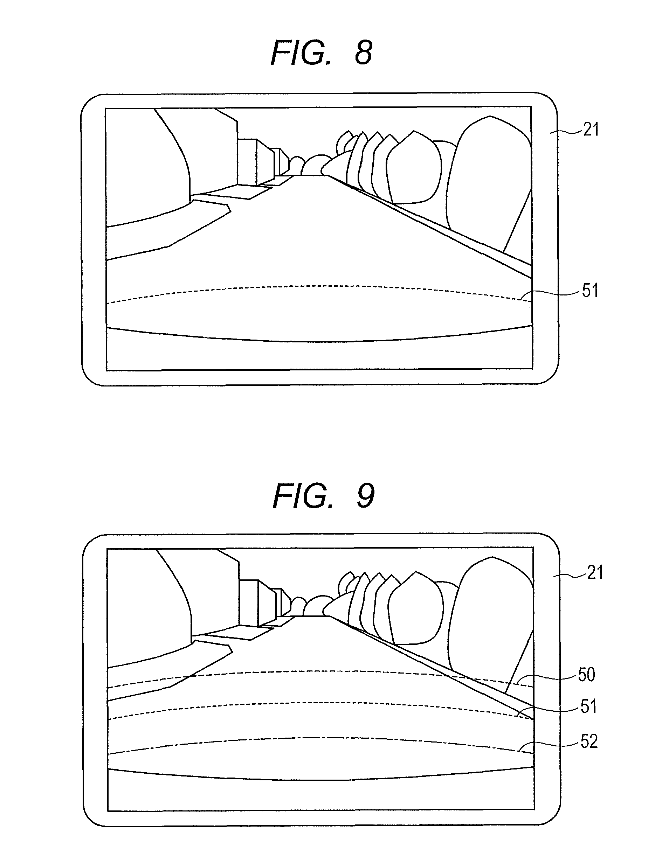

   Figure 8 is a diagram showing a display example of the monitor screen of the device for displaying the rearward field of view by the circuit configuration in Figure 7.
[Figure 9]
   Figure 9 is a diagram showing another display example of the monitor screen of the device for displaying the rearward field of view by the circuit configuration in Figure 7.
[Figure 10]

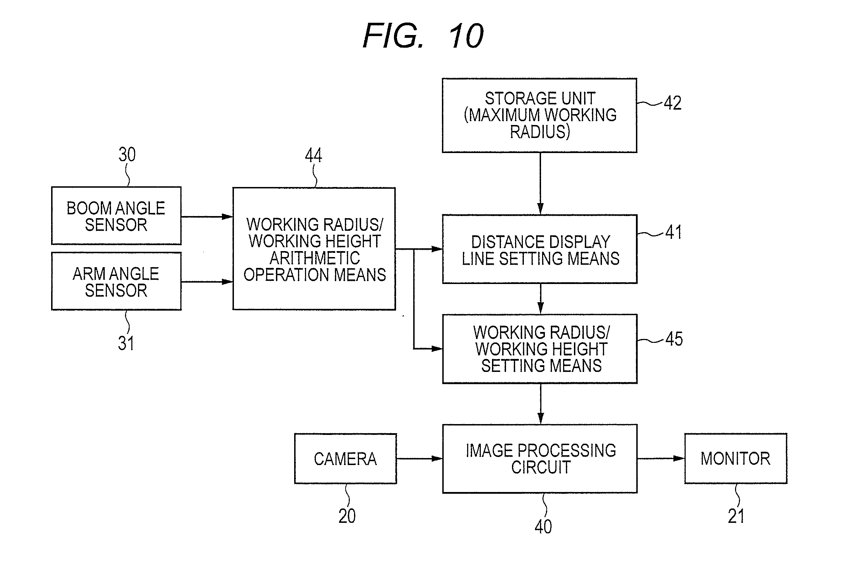

   Figure 10 is a diagram illustrating a further example of the circuit configuration of the device for displaying the rearward field of view in the example 1 of the present invention.
[Figure 11]

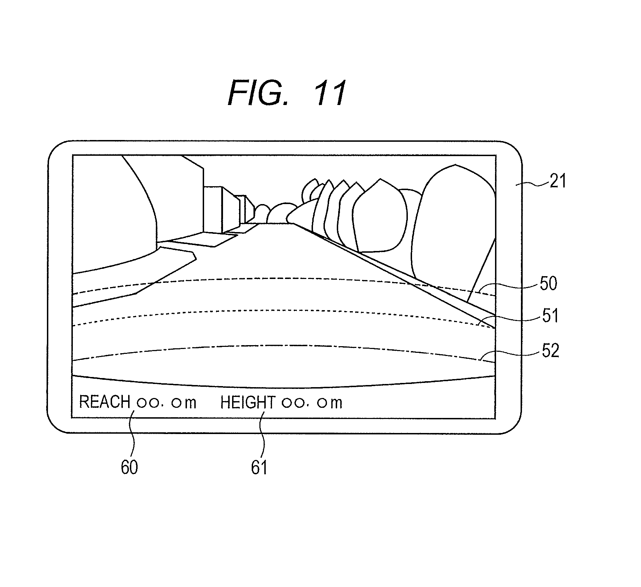

   Figure 11 is a diagram showing a display example of the monitor screen of the device for displaying the rearward field of view by the circuit configuration in Figure 10.

### Description of Preferred Embodiments

In the following, embodiments of a device for displaying the rearward field of view of a hydraulic shovel of the present invention will be described using the drawings. Incidentally, in the respective drawings, the parts to which the same symbols are assigned indicate the same or corresponding parts.

### <Embodiment 1>

Figure 1 is a general configuration diagram of a hydraulic shovel provided with a device for displaying the rearward field of view of the present embodiment, and Figure 2 is a diagram of the hydraulic shovel when viewed from behind.

A hydraulic shovel 1 is provided with a lower traveling structure 2 provided with one pair of left and right crawler type traveling means, and an upper revolving structure 4 provided by being coupled to this lower traveling structure 2 to be revolvable via a revolving device 3. Therefore, it is possible to travel the entire vehicle by the lower traveling structure 2 so as to move forward and backward and it is possible to revolve the upper revolving structure 4 relative to the lower traveling structure 2. A revolving center when this upper revolving structure 4 is revolved is designated by O in the drawing.

A driving cab 10 in which an operator boards to perform the operation of the entire machine is installed on the upper revolving structure 4, and an articulated front working machine 14 is mounted on a front part of the aforementioned upper revolving structure 4 as a working machine. The aforementioned front working machine 14 is provided with a boom 11 which is attached to the front part of the aforementioned upper revolving structure 4 so as to freely face downward and upward, and an arm 12 one end of which is attached to a leading end side of the boom 11 to be rotatable and to the other end of which a bucket 13 (this bucket 13 is made to be replaceable with another attachment) is attached as a working tool. In addition, the aforementioned front working machine 14 is provided with a boom angle sensor 30 for detecting an angle of the aforementioned boom 11 and an arm angle sensor 31 for detecting an angle of the aforementioned arm 12. Incidentally, a bucket angle sensor for detecting an angle of the aforementioned bucket 13 may be provided.

In a region behind a part where the aforementioned driving cab 10 and front working machine 14 are installed, a building 15 in which machinery such as an engine, a hydraulic pump, a control valve and so forth is installed is provided, and tanks such as a hydraulic oil tank and a fuel tank are also installed. Further, a counter weight 16 is installed at the rearmost position of the upper revolving structure 4.

Although in a case where the hydraulic shovel 1 is operated to perform work such as sediment excavation or the like, the operator operates operation means such as an operation lever, an operation pedal and so forth in the driving cab 10, since the front working machine 14 operates in front of the operator, the operator can directly see an operating state thereof to confirm safety. In addition, although forward safety can be confirmed when the vehicle is traveling and the upper revolving structure 4 is being revolved, it is difficult to confirm rearward safety and there also exists a direction which would be in a so-called blind spot because the field of view is obstructed by the building 15 or the like.

Therefore, when the vehicle is to be moved backward and when the upper revolving structure 4 is to be revolved, in order to obtain rearward and diagonally rearward view fields for assistance, a rearward monitoring camera 20 is installed on the counter weight 16 which is situated on the rearmost part of the upper revolving structure 4, the rearward area is photographed by this camera 20 to allow visual recognition by the operator. Here, it is desirable that the camera 20 be of the type capable of photographing it in a moving image state, that is, be configured by a television camera.

The image of the rearward view field captured by the camera 20 is made to be displayed on a monitor 21 which is installed in the driving cab 10. This monitor 21 is installed at a position where the operator can readily observe it in a state that he sits on the driver's seat installed in the driving cab 10 and the rearward view field is not obstructed to the greatest possible extent. Owing to this, it is made such that the operator can confirm rearward and diagonally rearward safety by visually observing this monitor 21 when the rearward view field is needed such as when the vehicle is to be moved backward, when the upper revolving structure 4 is to be revolved or the like.

As shown in Figure 2, the camera 20 is installed on a rear end upper face part of the counter weight 16 and at an intermediate position in a width direction. In addition, the view center of the aforementioned camera 20 is directed rearward and diagonally downward. That is, it is made such that images standing on the road surface over a somewhat wide range can be acquired in order to photograph images of an object such as an architectural structure and a person such as a worker present on the rear ground. Although it is made to exhibit a certain sense of distance on the monitor 21 by directing the view field of the camera 20 diagonally downward as mentioned above, it is impossible to always grasp the sense of perspective of an image which is being displayed on this monitor 21 accurately.

Therefore, the present embodiment has a configuration that on the aforementioned monitor 21, the image acquired by the aforementioned camera 20 is displayed and a distance display line indicating a maximum working radius by the aforementioned front working machine 14 is displayed by superposing on the image acquired by the aforementioned camera 20. In the following, this specific configuration will be described using Figure 3 to Figure 6.

Figure 3 is a diagram for explaining the maximum working radius in the hydraulic shovel, and a revolving radius from the revolving center O of the hydraulic shovel 1 to the most leading end (a leading end of the bucket 13) in a state that the front working machine 14 is fully extended forward is the maximum working radius.

Figure 4 is a diagram showing a circuit configuration for displaying the distance display line indicating the aforementioned maximum working radius by superposing on the image acquired by the camera.

As shown in Figure 4, the image which has been acquired by the rearward monitoring camera 20 installed on the rear part of the upper revolving structure 4 is made to be displayed on the monitor 21 installed in the driving cab 10 after having been fetched into an image processing circuit 40. In addition, a storage unit 42 for storing in advance the maximum working radius or the like of the aforementioned front working machine 14, and a distance display line setting means 41 for setting the distance display line indicating the maximum working radius or the like on the aforementioned monitor 21 on the basis of information on the maximum working radius or the like stored in this storage unit 42 are provided, and this distance display line setting means 41 is connected to the aforementioned image processing circuit 40.

In the aforementioned image processing circuit 40, image processing is performed so as to display the distance display line from the aforementioned distance display line setting means 41 on the aforementioned monitor 21 by superposing on the image from the aforementioned camera 20. Incidentally, the aforementioned image processing circuit 40, distance display line setting means 41 and storage unit 42 can be configured by a microcomputer or the like. In addition, the maximum working radiuses corresponding to the kinds of the front working machines to be used may be stored in the aforementioned storage unit 42 and a corresponding maximum working radius may be selected when working, or the maximum working radius may be input from the monitor 21 or the like before working and may be stored in the aforementioned storage unit 42.

Figure 5 and Figure 6 are illustrations showing display examples on a monitor screen of the device for displaying the rearward field of view.
(a) of Figure 5 is a synthetic image that on the monitor 21, with the image from the camera 20, a distance display line 50 indicating the aforementioned maximum working radius by the front working machine 14 which is stored in the aforementioned storage unit 42 is displayed by a broken line by superposing on this. Therefore, the operator of the hydraulic shovel 1 can readily recognize that it does not come into contact with an object and a person present far away from the distance display line 50 indicating the maximum working radius even when the upper revolving structure 4 is revolved in any posture of the front working machine 14.
(b) of Figure 5 is a synthetic image that on the monitor 21, with the image from the camera, a distance display line 52 indicating a minimum revolving radius of the upper revolving structure 4 is displayed by a one-dot chain line by superposing on this. That is, in the present embodiment, also the minimum revolving radius of the upper revolving structure 4 including the front working machine 14 is stored in the aforementioned storage unit 42 in addition to the maximum working radius of the aforementioned front working machine 14. The minimum revolving radius of the upper revolving structure 4 is a revolving radius of the upper revolving structure 4 including the front working machine 14 in a state of the front working machine 14 that the boom 11, the arm 2 and the bucket 13 are being rotated so as to minimize the revolving radius. Therefore, in a case where an object or the like is not present on the inner side of the distance display line 52 indicating this minimum revolving radius, the operator of the hydraulic shovel can recognize that it is possible to revolve the upper revolving structure 4 by rotating the aforementioned boom 11, arm 12 and bucket 13 so as to minimize the revolving radius of the upper revolving structure 4 including the aforementioned front working machine 14.

Figure 6 is a synthetic image that on the monitor 21, with the image from the camera 20, the distance display line 50 indicating the aforementioned maximum working radius which is stored in the storage unit 42 and the distance display line 52 indicating the aforementioned minimum revolving radius of the upper revolving structure 4 which is stored in the storage 42 are displayed by a dotted line and a one-dot chain line by superposing on this.

In a case where an object or the like is present behind the upper revolving structure 4 only at a distance from the distance display line 50 indicating the maximum working radius, the work by the hydraulic shovel can be safely performed by displaying the distance display line 50 of the maximum working radius and the distance display line 52 of the minimum revolving radius on the monitor 21 by superposing on the image from the camera 20. In addition, even in a case where the object or the like is present on the inner side of the aforementioned distance display line 50, the operator can readily recognize that it is possible to revolve the upper revolving structure 4 by rotating the aforementioned boom 11, arm 12 and bucket 13 so as to minimize the revolving radius of the upper revolving structure 4 when it is on the outer side of the distance display line 52 indicating the minimum revolving radius.

Another example of the circuit structure shown in Figure 4 is shown in Figure 7. In the present embodiment, as described above, the aforementioned front working mechanism 14 of the hydraulic shovel 1 shown in Figure 1 is provided with the boom angle sensor 30 for detecting the angle of the aforementioned boom 11 and the arm angle sensor 31 for detecting the angle of the aforementioned arm 12. Thus, in the example shown in Figure 7, it is configured such that a work-in-progress actual working radius of the aforementioned front working machine 14 is arithmetically operated from the angles of the boom and the arm detected by the aforementioned boom angle sensor 30 and the aforementioned arm angel sensor 31, and the image acquired by the aforementioned rearward monitoring camera 20 is displayed and the distance display line indicating the arithmetically operated working radius is displayed by superposing on the image acquired by the aforementioned camera 20 on the aforementioned monitor 21. In the following, it will be described in more detail using Figure 7.

Different points of the circuit configuration of Figure 7 from the circuit configuration shown in Figure 4 will be described. In the circuit configuration shown in Figure 7, in addition to the circuit configuration of Figure 4, a working radius arithmetic operation means 43 is further provided. This working radius arithmetic operation means 43 receives signals from the boom angle sensor 30 and the arm angle sensor 31 provided on the front working machine 14 and arithmetically operates the work-in-progress actual working radius of the front working machine 14, that is, a revolving radius from the revolving center O of the upper revolving structure 4 to a part situated on the outermost side of the front working machine 14 from a working posture of the front working machine 14.

Incidentally, in the above description, it is made to arithmetically operate the actual working radius of the front working machine 14 by the boom angle and the arm angle. This is the one that since the influence of the rotation of the bucket on the working radius is less than those of the boom and the arm, the length of the bucket is made fixed without detecting the angle of the bucket, this is added to the working radius which is arithmetically operated on the basis of the aforementioned boom angle and arm angle to calculate a rough working radius. However, in the one that a bucket angle sensor for detecting the angle of the bucket 13 is provided on the aforementioned front working machine 14, the aforementioned working radius when the work is in progress can be more accurately obtained when the work-in-progress actual working radius is arithmetically operated by receiving also a signal from this bucket angle sensor.

Information on the working radius calculated by this working radius arithmetic operation means 43 is transmitted to the distance display line setting means 41. In this distance display line setting means 41, a distance display line for displaying the work-in-progress working radius of the front working machine 14 is set on the aforementioned monitor 21 on the basis of the information from the aforementioned working radius arithmetic operation means 43. This distance display line setting means 41 is connected to the image processing circuit 40 similarly to Figure 4, and in this image processing circuit 40, image processing is performed such that the distance display line of the aforementioned working radius from the aforementioned distance display line setting means 41 is displayed on the aforementioned monitor 21 by superposing on the image from the aforementioned camera 20. Since other configurations are the same as those of the circuit configuration shown in Figure 4, description thereof is omitted. In addition, as in the case in Figure 4, the aforementioned image processing circuit 40, distance display line setting means 41, storage unit 42 and working radius arithmetic operation means 43 can be configured by a microcomputer or the like.

Figure 8 shows a display example on a monitor screen of the device for displaying the rearward field of view by the circuit configuration described in Figure 7. In this example, on the monitor 21, with the image from the camera 20, a distance display line 51 displaying the work-in-progress working radius of the aforementioned front working machine 14 from the aforementioned distance display line setting means 41 is displayed by a dotted line by superposing on this.

In the example shown in Figure 8, although only the camera image and the distance display line 51 of the work-in-progress actual working radius of the front working machine 14 are displayed on the monitor 21, whether it comes into collision with or contact with an object and a person present behind it can be instantaneously decided by displaying the distance display line 51 of the aforementioned work-in-progress working radius even when the upper revolving structure 4 is revolved in its working posture and it becomes possible to safely and efficiently perform the work.

Incidentally, according to the circuit configuration shown in Figure 7, it is also possible to make the display on the monitor as shown in Figure 9. Figure 9 is an example that in addition to the distance display line 51 indicating the work-in-progress working radius shown in Figure 8, the distance display line 50 indicating the maximum working radius and the distance display line 52 indicating the minimum revolving radius of the upper revolving structure 4 shown in the above-mentioned Figure 6 are also displayed in combination. As shown in Figure 9, since the effect described in Figure 6 is also taken in addition to the effect described in Figure 8 by displaying also the aforementioned distance display lines 50 and 52 in addition to the aforementioned distance display line 51, it becomes possible to perform the work more safely and efficiently.

A further example of the circuit configuration shown in the above-mentioned Figure 4 and Figure 7 is shown in Figure 10. In Figure 10, the parts to which the same symbols as those in the aforementioned Figure 4 and Figure 7 are assigned indicate the same or corresponding parts.

In an example shown in Figure 10, a working radius/working height arithmetic operation means 44 is provided in place of the working radius arithmetic operation means 43 shown in Figure 7, and in this working radius/working height arithmetic operation means 44, the work-in-progress actual working radius of the front working machine 14 is arithmetically operated from the working posture of the front working machine 14 by receiving the signals from the boom angle sensor 33 and the arm angle sensor 31 as in the case in the example in Figure 7. In addition, in the aforementioned working radius/working height arithmetic operation means 44, it is configured such that also a work-in-progress actual working height of the front working machine 14 is arithmetically operated on the basis of the signals from the aforementioned boom angle sensor 30 and the aforementioned arm angle sensor 31.

Then, information on the working radius which has been calculated by the aforementioned working radius/working height arithmetic operations means 44 is transmitted to the distance display line setting means 41. In this distance display line setting means 41, a distance display line for displaying the work-in-progress working radius is set on the aforementioned monitor 21 on the basis of the information on the aforementioned working radius.

In addition, information on the working height which has been calculated by the aforementioned working radius/working height arithmetic operation means 44 is transmitted to a working radius/working height setting means 45 together with the information on the aforementioned calculated working radius. In this working radius/working height setting means 45, setting for displaying the information on the aforementioned obtained working radius and working height is performed.

The aforementioned distance display line setting means 41 and the aforementioned working radius/working height setting means 45 are connected to the image processing circuit 40 together with the storage unit 42 which stores the maximum working radius and so forth. In this image processing circuit 40, image processing for superposing the distance display line of the aforementioned working radius from the aforementioned distance display line setting means 41 on the image from the aforementioned camera 20, image processing for displaying the information on the aforementioned working radius and working height from the aforementioned working radius/working height setting means 45 on the aforementioned monitor 21 and so forth are performed.

Since other configurations are the same as those of the circuit configuration described in Figure 4 or Figure 7, description thereof is omitted. In addition, as in the cases in Figure 4 and Figure 7, the aforementioned image processing circuit 40, distance display line setting means 41, storage unit 42, working radius/working height arithmetic operation means 44, and working radius/working height setting means 45 can be configured by a microcomputer or the like.

Figure 11 shows a display example on the monitor screen of the device for displaying the rearward field of view by the circuit configuration described in Figure 10. In this example, on the monitor 21, with the image which has been image-processed by the aforementioned image processing circuit 40, that is, the image from the camera 20, the distance display line 51 for displaying the work-in-progress working radius of the aforementioned front working machine 14 from the aforementioned distance display line setting means 41 is displayed by a dotted line by superposing on this. In addition, in this example shown in Figure 11, similarly to the example shown in the above-mentioned Figure 9, the aforementioned image processing circuit 40 is configured to display the distance display line 50 indicating the maximum working radius by a broken line and the distance display line 52 indicating the minimum revolving radius of the upper revolving structure 4 by a one-dot chain line in combination.

Incidentally, in displaying the aforementioned respective distance display lines 51, 50 and 52, although in this example, they are displayed respectively by the dotted line, the broken line and the one-dot chain line as described above, there are not limited to those and they may be displayed so as to be distinguishable from one another by respectively using different kinds of lines. Further, the aforementioned respective distance display lines 50 to 52 may be displayed to be distinguishable by changing the color and the thickness of lines or may be displayed by changing the color and the thickness of lines simultaneously with changing the kind of the aforementioned lines.

Further, also the information on the aforementioned working radius and working height from the aforementioned working radius/working height setting means 45 is image- processed by the aforementioned image processing circuit 40 so as to be displayed on a working radius display part 60 and a working height display part 61 of the aforementioned monitor 21. In this example, the aforementioned working radius display part 60 is displayed in metric units (m) as preach" and the aforementioned working height display part 61 is displayed in metric units (m) as "Height" on a lower part of the aforementioned monitor 21.

As described above, since in the example shown in Figure 10 and Figure 11, it is configured to numerically display the working radius and the working height in metric units (m) on the monitor 21, it becomes easier to decide the possibility of collision and contact not only with the architectural structure and so forth in the rearward view field displayed on the monitor 21 but also with the architectural structures and so forth on the sides, in front of and above the hydraulic shovel 1 which are not displayed on the monitor 21. Therefore, according to this example, it becomes possible to more safely perform the revolving operation and so forth.

Incidentally, although in the example, it is made such that both of the working radius and the working height are numerically displayed in metric units (m), it may be made such that only the working height or only the working radius is displayed and numerical display is not limited to the metric (m) display.

As described hereinabove, according to the above-mentioned example of the present invention, the following effects can be obtained.

That is, as shown in Figure 4 and Figure 5(a), in the one made such that the camera image which has been photographed by the rearward monitoring camera 20 attached onto the rear part of the upper revolving structure 4 of the hydraulic shovel 1 is displayed on the monitor 21 installed in the driving cab 10 of the hydraulic shovel 1 and the distance display line 50 of the maximum working radius of the front working machine 14 is displayed by superposing on this camera image, confirmation as to whether the object such as the architectural structure, an obstacle or the like, or the person such as the worker or the other is present within a working area behind the upper revolving structure 4 of the hydraulic shovel 1 can be instantaneously and readily performed. As a result, there can be obtained the device for displaying the rearward field of view of the hydraulic shovel which is capable of safely and efficiently performing the work using the front working machine.

In addition, as shown in Figure 7 and Figure 8, in the one made such that the work-in-progress actual (at that time point) working radius of the front working machine 14 is arithmetically operated by receiving the signals from the boom angle sensor 30 and the arm angle sensor 31 and the distance display line 51 of this working radius is displayed on the aforementioned monitor 21 together with the image photographed by the camera 20, whether it comes into collision with or contact with the object and the person present behind it can be instantaneously decided even if the upper revolving structure 4 is revolved in a working posture at that time point that the work is in progress and the work can be safely and more efficiently performed.

Further, as shown in Figure 6 and Figure 9, in the one made such that also the distance display line 52 indicating minimum revolving radius of the upper revolving structure 4 is displayed on the aforementioned monitor 21, even in a case where the object or the like is present on the inner side of the distance display line 50 indicating the aforementioned maximum working radius or the distance display line 51 indicating the aforementioned work-in-progress working radius, the operator can instantaneously decide that he can safely revolve the upper revolving structure 4 by controlling the posture of the front working machine 14 so as to minimize the revolving radius when it is on the outer side of the distance display line 52 indicating the aforementioned minimum revolving radius.

In addition, as shown in the above-mentioned Figure 9, in the one made such that the distance display line 50 indicating the maximum working radius and the distance display line 51 indicating the work-in-progress working radius are displayed on the aforementioned monitor 21, since whether the object or the like is present within the work-in-progress actual working radius can be readily confirmed, whether there is the possibility of collision or contact with the aforementioned object or the like can be instantaneously decided even if the upper revolving structure 4 is revolved in the current working posture even in a case where the object or the like is present within the maximum working radius behind the upper revolving structure, and the effect that it becomes possible to avoid contact to revolve the upper revolving structure 4 is obtained by rotating the boom 11 and the arm 12 so as to reduce the revolving radius even in a case where there is the possibility of contact or the like.

Further, as shown in the above-mentioned Figure 10 and Figure 11, in the one configured such that the working radius and the working height are numerically displayed on the monitor 21 together with the distance display line 50 of the maximum working radius and the distance display line 51 for displaying the work-in-progress working radius, it becomes possible to more safely perform the revolving operation or the like not only for the architectural structure or the like in the rearward view field displayed on the monitor 21 but also for the architectural structures and the like on the sides, in front of and above the hydraulic shovel 1 which are not displayed on the monitor 21.

### Reference Signs List

1: hydraulic shovel, 2: lower traveling structure, 3: revolving device, 4: upper revolving structure, 10: driving cab, 14: front working machine (11: boom, 12: arm, 13: bucket (working tool)), 15: building, 16: counter weight, 20: rearward monitoring camera (camera), 21: monitor, 30: boom angle sensor, 31: arm angle sensor, 40: image processing circuit, 41: distance display line setting means, 42: storage unit, 43: working radius arithmetic operation means, 44: working radius/working height arithmetic operation means, 45: working radius/working height setting means, 50: distance display line of maximum working radius, 51: distance display line of work-in-progress working radius, 52: distance display line of minimum revolving radius, 60: working radius display part, 61: working height display part.

## Claims

1. A device for displaying the rearward field of view of a hydraulic shovel, comprising: a lower traveling structure; an upper revolving structure provided on this lower traveling structure to be revolvable; a front working machine provided on a front part of this upper revolving structure; a camera provided on a rear part of the upper revolving structure in order to obtain the rearward field of view of this revolving structure; and a monitor for displaying an image acquired by this camera,
wherein a configuration is such that
a maximum working radius of the front working machine is stored in advance, and
on the monitor, the image acquired by the camera is displayed, and a distance display line indicating the maximum working radius by the front working machine is displayed by superposing on the image acquired by the camera.

2. The device for displaying the rearward field of view of the hydraulic shovel according to claim 1,
wherein a configuration is such that
the front working machine is provided with a boom attached to a front part of the upper revolving structure so as to freely face downward and upward, an arm one end of which is attached to a leading end side of this boom to be rotatable and to the other end of which a working tool is attached, a boom angle sensor for detecting an angle of the boom, and an arm angle sensor for detecting an angle of the arm,
a work-in-progress working radius of the front working machine is arithmetically operated from the angles of the boom and the arm detected by the boom angle sensor and the arm angle sensor, and
on the monitor, a distance display line indicating the maximum working radius and a distance display line indicating the arithmetically operated working radius are displayed by superposing on the image acquired by the camera.

3. A device for displaying the rearward field of view of a hydraulic shovel, comprising: a lower traveling structure; an upper revolving structure provided on this lower traveling structure to be revolvable; a front working machine provided on a front part of this upper revolving structure; a camera provided on a rear part of the upper revolving structure in order to obtain the rearward field of view of this revolving structure; and a monitor for displaying an image acquired by this camera, the front working machine having a boom attached to a front part of the upper revolving structure so as to freely face downward and upward and an arm one end of which is attached to a leading end side of this boom to be rotatable and to the other end of which a working tool is attached,
wherein a configuration is such that
a boom angle sensor for detecting an angle of the boom and an arm angle sensor for detecting an angle of the arm are provided, a work-in-progress working radius of the front working machine is arithmetically operated from the angles of the boom and the arm detected by the boom angle sensor and the arm angle sensor, and
on the monitor, an image acquired by the camera is displayed, and a distance display line indicating the arithmetically operated working radius is displayed by superposing on the image acquired by the camera.

4. The device for displaying the rearward field of view of the hydraulic shovel according to claim 1,
wherein a configuration is such that
a minimum revolving radius of the upper revolving structure including the front working machine is stored in advance, and
on the monitor, a distance display line indicating the minimum revolving radius is displayed by superposing on the image acquired by the camera.

5. The device for displaying the rearward field of view of the hydraulic shovel according to any of claims 1 to 4,
wherein a configuration is such that
the front working machine is provided with a boom attached to a front part of the upper revolving structure so as to freely face downward and upward, an arm one end of which is attached to a leading end side of this boom to be rotatable and to the other end of which a working tool is attached, a boom angle sensor for detecting an angle of the boom, and an arm angle sensor for detecting an angle of the arm,
a work-in-progress working height of the front working machine is arithmetically operated from the angles of the boom and the arm detected by the boom angle sensor and the arm angle sensor, and
on the monitor, the arithmetically operated working height is numerically displayed on the image acquired by the camera.

6. The device for displaying the rearward field of view of the hydraulic shovel according to claim 5,
wherein a configuration is such that
a work-in-progress working radius of the front working machine is arithmetically operated from the angles of the boom and the arm detected by the boom angle sensor and the arm angle sensor, and
on the monitor, also the arithmetically operated working radius is numerically displayed on the image acquired by the camera.

## Amended claims

### Amended claims under Art. 19.1 PCT

**1.** (Amended) A device for displaying the rearward field of view of a hydraulic shovel, comprising: a lower traveling structure; an upper revolving structure provided on this lower traveling structure to be revolvable; a front working machine provided on a front part of this upper revolving structure; a camera provided on a rear part of the upper revolving structure in order to obtain the rearward field of view of this revolving structure; and a monitor for displaying an image acquired by this camera,
wherein a configuration is such that
a maximum working radius of the front working machine and a minimum revolving radius of the upper revolving structure including the front working machine are stored in advance, and
on the monitor, the image acquired by the camera is displayed, and a distance display line indicating the maximum working radius by the front working machine and a distance display line indicating the minimum revolving radius are displayed by superposing on the image acquired by the camera.

**2.** (Amended) The device for displaying the rearward field of view of the hydraulic shovel according to claim 1,
wherein a configuration is such that
the front working machine is provided with a boom attached to a front part of the upper revolving structure so as to freely face downward and upward, an arm one end of which is attached to a leading end side of this boom to be rotatable and to the other end of which a working tool is attached, a boom angle sensor for detecting an angle of the boom, and an arm angle sensor for detecting an angle of the arm,
a work-in-progress working radius of the front working machine is arithmetically operated from the angles of the boom and the arm detected by the boom angle sensor and the arm angle sensor, and
on the monitor, a distance display line indicating the maximum working radius, a distance display line indicating the minimum revolving radius and a distance display line indicating the arithmetically operated working radius are displayed by superposing on the image acquired by the camera.

**3.** (Deleted)

**4.** (Deleted)

**5.** (Amended) The device for displaying the rearward field of view of the hydraulic shovel according to claim 1 or 2,
wherein a configuration is such that
the front working machine is provided with a boom attached to a front part of the upper revolving structure so as to freely face downward and upward, an arm one end of which is attached to a leading end side of this boom to be rotatable and to the other end of which a working tool is attached, a boom angle sensor for detecting an angle of the boom, and an arm angle sensor for detecting an angle of the arm,
a work-in-progress working height of the front working machine is arithmetically operated from the angles of the boom and the arm detected by the boom angle sensor and the arm angle sensor, and
on the monitor, the arithmetically operated working height is numerically displayed on the image acquired by the camera.

**6.** (Amended) The device for displaying the rearward field of view of the hydraulic shovel according to claim 5,
wherein a configuration is such that
a work-in-progress working radius of the front working machine is arithmetically operated from the angles of the boom and the arm detected by the boom angle sensor and the arm angle sensor, and
on the monitor, also the arithmetically operated working radius is numerically displayed on the image acquired by the camera.

Statement under Art. 19.1 PCT
According to the Written Opinion of the International Searching Authority, it is of opinion that Claim 4 "involves" novelty and an inventive step. Therefore, an amendment (an amendment that the contents of the statement of Claim 4 are included in Claim 1) that the statement of Claim 4 is added to Claim 1 has been made and Claim 4 has been deleted.

Claim 2 has been amended so as to match the amended Claim 1.

Claim 3 has been deleted.

Claim 5 has been amended so as to depend on Claim 1 or Claim 2 with deletion of Claims 3 and 4.

Owing to the above mentioned amendment, all the claims of the present patent application have turned into claims "involving" the novelty and the inventive step.
